Europäisches Patentamt

European Patent Office

Office européen des brevets

(19)

(11) Publication number: **0 072 126**
A2

(12) # EUROPEAN PATENT APPLICATION

(21) Application number: 82303886.4

(22) Date of filing: 22.07.82

(51) Int. Cl.³: **H 01 G 1/147, H 01 G 4/30**

(30) Priority: 04.08.81 GB 8123850
09.02.82 GB 8203644

(43) Date of publication of application: **16.02.83**
Bulletin 83/7

(84) Designated Contracting States: **DE FR IT**

(71) Applicant: **International Standard Electric Corporation, 320 Park Avenue, New York New York 10022 (US)**

(72) Inventor: **Alexander, John Henry, 23 Blackbushe, Bishop's Stortford Hertfordshire (GB)**

(74) Representative: **Dennis, Mark Charles et al, ITT-UK Patent Department Maidstone Road, Foots Cray Sidcup DA14 5HT (GB)**

(54) **Multilayer ceramic dielectric capacitors.**

(57) Metal-impregnated-electrode multilayer-ceramic-dielectric capacitors are provided with solderable end terminations by a process including the steps of (1) firing a stack of ceramic dielectric sheets which are at least partially separated, before firing, by a fugitive ink which burns, during firing, to leave spaces between the sheets, which sheets become at least partially sealed together during firing; (2) providing two electrically conductive end terminations which are not readily soluble in the impregnation metal, for example, lead, each termination connecting a respective set of alternate spaces; (3) impregnating the spaces with the impregnation metal, and (4) rendering the end terminations solderable by applying a solderable metal layer thereon by, for example, flame spraying or magnetron sputtering. The termination manufacturing procedure may alternatively be employed in connection with other electrical components.

0072126

J.Alexander 17X

## MULTILAYER CERAMIC DIELECTRIC CAPACITORS

This invention relates to electrical components such as multilayer ceramic dielectric capacitors and in particular although not exclusively to metal impregnated-electrode multilayer-ceramic-dielectric capacitors.

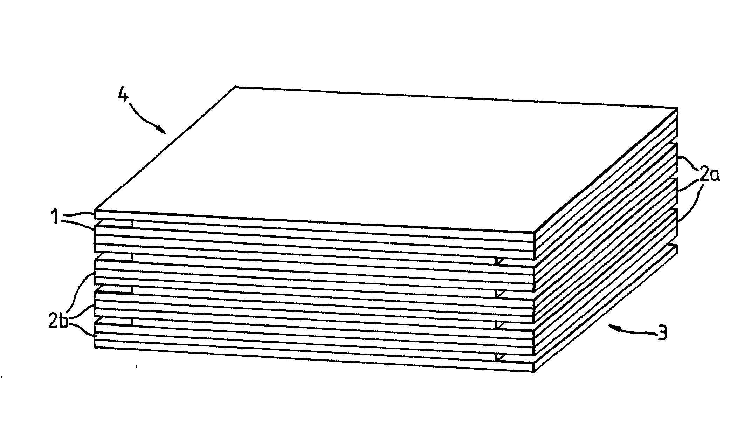

A perspective schematic view of a basic multilayer ceramic dielectric capacitor structure is shown in the accompanying drawing. The basic capacitor comprises a stack of ceramic dielectric layers 1 with electrodes 2a and 2b therebetween. Alternate electrodes 2a terminate at the right hand face 3 and do not extend completely to the left hand face 4, whereas alternate electrodes 2b extend to the left hand face 4, but do not reach the right hand face 3. Thus the electrodes 2b can be electrically interconnected at the end face 4 (end terminated) and the electrodes 2a can be likewise electrically interconnected at the end face 3, to form two electrically-insulated sets of electrodes 2a and 2b. In order to facilitate preparation of the drawing the latter shows the electrode sets extending to the lateral sides of the stack. However, in practice neither set of electrodes extend to the lateral sides, which in the finished device are all ceramic. Instead of the internal electrodes 2a and 2b being rectangular and stepped sideways in successive layers as shown, they may alternatively, for example, have elongate portions which cross one another as described in our GB Application No. 41677/78 (Serial No. 2032689).

The manufacture of multilayer-ceramic-dielectric capacitors with the basic structure shown in the drawing comprises the following steps. Green (unfired) ceramic sheets of barium titanate, for example, are prepared in a conventional manner, for example tape casting, tape drawing or printing. In order to manufacture capacitors in quantity a screen-printing technique is employed to print a large number of electrodes side by side on one relatively large sheet of green ceramic although alternatively a single electrode may be provided on a suitably sized sheet of green ceramic. The electrodes may be printed by means of a conductive ink or, in the case of lead impregnated electrodes, the printed electrode on the green ceramic comprises a fugitive electrode printed by means of a fugitive electrode ink comprising a charcoal powder with a binder and solvent such as to make it compatible with the green ceramic. Further sheets are similarly printed. A number of such sheets, the number corresponding to the number of electrodes in each capacitor, are stacked one on top of the other with the electrodes staggered and partially overlying one another as illustrated in the drawing. A blank green ceramic sheet is applied to the top of the stack. Extra blank green ceramic sheets may be applied to the top and bottom of the stack in order to protect the outer electrodes and to give an adequate strength to the finished device. The block of stacked green ceramic sheets thus formed is cut to make individual green capacitor elements. The electrodes do not extend up to the lateral cut faces as previously mentioned.

Subsequently the capacitors are fired. In the case of fugitive electrode devices the green capacitor elements are heated at, for example, $1^{\circ}C/min$ to $350^{\circ}C$ to bake out the binders in the fugitive ink and the green ceramic, before firing at, for example, $200^{\circ}C/hour$ to $1120^{\circ}C$ for 2 hours in a conventional manner, during which firing the charcoal of the fugitive ink burns, providing spaces between the dielectric layers comprised by the fired ceramic sheets which become sealed together during the firing process.

The fired capacitor elements are then end terminated at faces 3 and 4 whereby to connect the respective sets of alternate spaces between the dielectric layers corresponding to electrodes 2a and 2b of the drawing. After firing only the spaces corresponding to electrodes 2a are exposed at end face 3, whereas only the spaces corresponding to electrodes 2b are exposed at end face 4, the illustrated gaps at the end faces 3 and 4 provided by the staggered overlying arrangement of the fugitive electrodes being closed by ceramic of the dielectric layers 1 during the manufacturing process. Likewise the lateral faces are closed by ceramic. Thus terminations applied to end faces 3 and 4 can only connect a respective one set of spaces.

The end terminations of multilayer capacitors are generally formed from silver, for example, such as by applying a conductive paint, and, after lead impregnation if appropriate, in this format the capacitor is a saleable item. However, external connection terminals can be soldered to the painted faces and the capacitor encapsulated in, for example, resin. Alternatively it is also conventional to end terminate (interconnect the internal electrodes) by means of a silver and glass frit which is fired onto the end faces in air at some temperature above 700°C. The actual temperature depends on the softening temperature of the glass frit and whether or not there is any palladium or platinum loading of the silver to reduce leaching at the soldering stage. In order to reduce costs it is desirable to be able to provide end terminations without the use of or with minimum use of precious metals. However, cheap non-precious metal alternatives were hitherto considered to require the use of vacuum systems or controlled atmospheres for their application.

The present invention is directed towards various aspects of alternative methods of providing terminations during the manufacture of electrical components such as multilayer ceramic capacitors.

According to one such method end terminations are manufactured by applying a frit containing glass and aluminium or aluminium alloy to end faces of a capacitor to which electrodes of the capacitor extend, and firing the frit in air.

According to another method a fired stack of ceramic dielectric sheets, which are partially sealed together and partially separated by spaces between the sheets, is provided with two electrically conductive end terminations which are not readily soluble in an impregnation metal employed to provide electrodes in the spaces, the end terminations being rendered solderable after the metal impregnation process by providing a layer of a solderable metal thereon.

The invention also envisages a method of making an electrical component by a method comprising the steps of providing an insulating substrate, forming a connection termination on the substrate which is not readily solderable, forming an electrode of the component in electrical contact with the termination, and the forming a solderable layer on at least a part of the termination whereby external connection can be made to the component by conventional tin soldering.

In addition there is envisaged a method of manufacturing an electrode or electrical termination on a ceramic body of an electrical component comprising the steps of applying a paste comprising a nickel/boron powder, or a nickel/boron powder and a glass frit, to the body and firing the paste in air whereby to provide electrically conductive regions which are bonded to the body.

The advantages provided by various aspects of the present invention will be apparent from the following description.

Contrary to the previous belief that cheap non-precious metal termination alternatives would require the use of vacuum systems or controlled atmospheres for their application, we have found that aluminium powder, for example, can be used as an alternative or together with silver in frits and that these frits can be air fired at temperatures, depending on the glass frit, of up to the order of $800^{\circ}C$, for example, and give good conductive end terminations. The actual firing temperature should be such that the frit reacts sufficiently with the ceramic to produce a good bond. It was previously considered that it would be unacceptable to air fire aluminium due to the production of aluminium oxides which would result in high electrical resistance of the end terminations. Surprisingly we have found that this is not the case and that low resistance terminations, which resistances are comparable with silver/glass frit terminations, can be produced with these frits which are air fired at temperatures up to $800^{\circ}C$. The aluminium may be in the form of an aluminium alloy such as Al/Ag, Al/Zn, Al/Mg for example.

For lead impregnated capacitors it is preferable to employ materials for the end terminations which are porous to, but not readily soluble in, lead at the lead impregnation temperatures employed, such as, for example, aluminium or aluminium/silver mixtures, or a nickel/boron powder, as is described in greater detail hereinafter. The end terminations are preferably of such a porous nature whereby to facilitate subsequently lead impregnation into the dielectric layers to form the internal electrodes proper. Impregnation is from only two ends via the porous end terminations.

The capacitors may be end terminated, for example, by coating with a paste comprising. aluminium powder and a glass frit selected from many glasses that melt at approximately 700°C and will bond to the ceramic. The proportion of aluminium to glass (by weight) is generally 4:1, but may be as high as 1:1. The paste is fired on in air at approximately 750°C for 10 to 20 minutes to form the terminations. Alternatively, the paste may comprise an aluminium/silver powder and a glass frit, the metal to glass being in the proportions quoted above. The aluminium to silver proportion (by weight) may be in the range 9:1 to 1:9. These pastes are also fired at approximately 750°C in air and result in terminations with a resistivity comparable with 100% Ag. The firing times are chosen to be as short as. possible, whereby to prevent excessive oxidation, but sufficiently long to ensure reaction of the frit with the ceramic. The paste may also be comprised by a nickel/boron powder, with or without the addition of a glass frit, which is air fired at approximately 750°C to produce conductive end terminations.

In the case of fugitive electrode devices the terminated capacitor elements are lead impregnated in a vessel which is such as to permit the air in the spaces between the dielectric layers to be pumped out before the elements are immersed in lead at 370-400$^{\circ}$C. The lead is forced into the spaces by the application of a nitrogen pressure of approximately 40 psi for 20 minutes, in the case of porous end terminations. We plan to impregnate for a period of at least 10 minutes and at a pressure not exceeding 60 psi.

Some of the capacitors thus formed have been found to exhibit solderability problems, that is difficulties have occured when trying to solder connection wires to the end terminations or when trying to solder such capacitor chip elements directly to a suitable substrate.

We have found that it is possible to end terminate with porous electrodes before lead impregnation, as described above, and that solderable terminations can be obtained by further processing of the thus existing terminations after lead impregnation. Such further processing basically comprises providing a layer of a solderable metal to the existing end termination and this may be achieved by a conventional metal deposition process. It has been found that it is necessary to have a base termination layer, provided before lead impregnation, on which to deposit layer of solderable metal after impregnation, and that simply depositing solderable metal to the end faces after lead impregnation does not result in acceptable terminations due to problems caused by the lead shrinkage back from the edge.

In particular, solderable terminations may be obtained by flame spraying zinc onto the existing terminations. Flame spraying comprises creating an arc between the wires of the metal to be deposited, which arc atomises the metal which is then blown onto the object to be coated. The flame spraying equipment may comprise that supplied by Metallization Ltd. of Pear Tree Lane, Dudley, W.Midlands, England and employs two 2 mm. diameter zinc wires whose tips are moved towards one another by air motors to a point where an arc can be struck between them. The arc, produced by a 22 volt, 120 amp power supply, atomises the zinc, which is then blown by an air jet onto an object to be coated. A large area may be coated in a second or so with this process. The zinc wires are continuously fed from drums and so continuous coating may be carried out, for example a continuous stream of capacitors may be passed under the jet and coated, the portions of the capacitors not requiring zinc coating being suitably masked.

The zinc terminations thus provided may have their solderability characteristics further improved by the subsequent flame spraying thereon of a tin/zinc layer obtained from a flame spraying unit employing 60/40 Sn/Zn wire instead of zinc alone.

In order to achieve end terminations with optimum size and solderability characteristics it is preferable to employ a thin zinc layer followed by a thin tin/zinc layer. Whereas a thin tin/zinc layer alone produces a solderable termination, difficulties due to leaching tendencies may arise and it is thus preferable to employ a thin zinc layer under it. Other suitable solderable metals such as copper may alternatively be flame sprayed onto the existing terminations to render them solderable.

As an alternative to flame spraying the existing terminations may be rendered solderable by magnetron sputtering a solderable metal such as copper, nickel or gold layer thereon.

Whereas lead impregnation has been described above, impregnation can alternatively be performed with other metals or metal alloys.

Whereas the invention has been specifically described with respect to multilayer ceramic capacitors, it is equally applicable to terminations on other electrical components, for example film circuits, or the formation of electrodes or electrode terminations on other ceramic capacitor types or on other ceramic bodies, for example the end terminations or electrodes of disc capacitors.

CLAIMS:

1. A method of manufacturing a multilayer-ceramic-capacitor characterised by applying a frit containing glass and aluminium or aluminium alloy to end faces (3, 4) of the capacitor to which electrodes (2a, 2b) of the capacitor extend, and firing the frit in air.

2. A method as claimed in claim 1, characterised in that the capacitor is impregnated with metal electrode material which connects directly with the fired frit at the end faces.

3. A method as claimed in claim 1 or claim 2, characterised in that the frit is fired at a temperature up to 800°C.

4. A method as claimed in claim 1, 2 or 3, characterised in that the frit comprises an aluminium/silver powder and glass, the aluminium to silver proportion (by weight) being in the range 9:1 to 1:9.

5. A method as claimed in any one of the preceding claims, characterised in that the proportion of metal to glass (by weight) is in the range 4:1 to 1:1.

6. A method of manufacturing metal impregnated-electrode multilayer-ceramic-dielectric capacitors, including providing a fired stack of ceramic dielectric sheets (1) which are partially sealed together and partially separated by spaces between the sheets, and characterised by the steps of providing the fired stack with two electrically-conductive end terminations which are not readily soluble in the impregnation metal, each of which end terminations connects a respective set of alternate spaces, impregnating the spaces with the impregnation metal, and rendering the end terminations solderable by providing a layer of solderable metal thereon.

7.    A method as claimed in claim 6, characterised in that the end terminations are rendered solderable by flame spraying a layer of solderable metal thereon.

8.    A method as claimed in claim 7, characterised in that the solderable metal is zinc, a tin/zinc alloy or copper.

9.    A method as claimed in claim 7, characterised in that the solderable metal is zinc and that a tin/zinc layer is flame sprayed onto the zinc flame sprayed layer.

10.    A method as claimed in claim 6, characterised in that the end terminatins are rendered solderable by magnetron sputtering a layer of solderable metal thereon.

11.    A method as claimed in claim 10, wherein the solderable metal is copper, nickel or gold.

12.    A method as claimed in claim 6, characterised in that the end terminations are provided by coating respective portions of the fired stack with a paste and firing the coated stack.

13.    A method as claimed in claim 12, characterised in that the paste comprises aluminium powder and a glass frit; aluminium/silver powder and a glass frit; nickel/boron powder; or nickel boron/powder and a glass frit.

14.    A method as claimed in claim 2 or claim 6 or any claim appended thereto, characterised in that the impregnation metal is lead, the impregnation step is conducted in an atmosphere pressurised to not more than 60 psi, and the impregnation step is conducted for a period of at least ten minutes.

15. A method of making an electrical component characterised by steps of providing an insulating substrate, forming a connection termination on the substrate which is not readily solderable, forming an electrode of the component in electrical contact with the termination, and the forming a solderable layer on at least a part of the termination whereby external connection can be made to the component by conventional tin soldering.

16. A method of manufacturing an electrode or electrical termination on a ceramic body of an electrical component characterised by the steps of applying a paste comprising a nickel/boron powder, or a nickel/boron powder and a glass frit, to the body and firing the paste in air whereby to provide electrically conductive regions which are bonded to the body.

17. A method as claimed in claim 23, characterised in that the paste is fired at approximately 750$^{\circ}$C.